# EUROPÄISCHE PATENTANMELDUNG

(11) **EP 4 000 713 A1**
(43) Veröffentlichungstag der Anmeldung: **25.05.2022**
(21) Anmeldenummer: 20020521.9
(22) Anmeldetag: 11.11.2020
(51) Int. Cl.: B01D 53/14, B01D 53/26, C10K 1/00

(54) **VERFAHREN UND ANLAGE ZUR ENTFERNUNG VON KOHLENDIOXID AUS SYNTHESEGAS**

(71) Anmelder: L'Air Liquide Société Anonyme pour l'Etude et l'Exploitation des Procédés Georges Claude, 75321 Paris (FR)
(72) Erfinder: Schmidt, Sophia, 60439 Frankfurt am Main (DE); Linicus, Matthias, 60439 Frankfurt am Main (DE); Corbet, Sharon, 60439 Frankfurt am Main (DE)
(74) Vertreter: Stang, Stefan

(57) **Zusammenfassung**

Die vorliegende Erfindung betrifft ein Verfahren zum Entfernen von Kohlendioxid aus Synthesegas mit Hilfe eines hygroskopischen, physikalisch wirkenden Absorptionsmittels. Das Verfahren weist die Schritte auf, dass das Absorptionsmittel und das Synthesegas gekühlt werden; Wasser zumindest teilweise durch Kondensation aus dem Synthesegas entfernt wird; Kohlendioxid aus dem gekühlten Synthesegas durch das gekühlte Absorptionsmittel in einem physikalischen Absorptionsschritt bei erhöhtem Druck entfernt wird; beladenes Absorptionsmittel in einer Mehrzahl hintereinander geschalteter flash-Stufen behandelt wird, wobei in zumindest einer ersten flash-Stufe mitabsorbiertes Kohlenmonoxid und Wasserstoff aus dem beladenen Absorptionsmittel entfernt werden, und in einer der ersten flash-Stufe nachgeschalteten flash-Stufe Kohlendioxid aus dem beladenen Absorptionsmittel entfernt wird. Das Verfahren zeichnet sich durch eine hohe Rate an abgeschiedenem Kohlendioxid, sowie ein reines und trockenes (wasserfreies) Kohlendioxidprodukt aus. Die Erfindung betrifft ferner eine Anlage zur Durchführung des Verfahrens.

## Beschreibung

### Gebiet der Erfindung

Die Erfindung betrifft ein Verfahren zum Entfernen von Kohlendioxid (CO₂) aus Synthesegas, insbesondere bei der Herstellung von Wasserstoff (H₂). Die Erfindung betrifft ferner eine Anlage zum Entfernen von Kohlendioxid (CO₂) aus Synthesegas, insbesondere als Teil einer Anlage zur Herstellung von Wasserstoff (H₂).

### Stand der Technik

Die Herstellung von Wasserstoff auf Basis fossiler Einsatzstoffe umfasst häufig einen Reformierungsschritt für die Synthesegaserzeugung aus einem gasförmigen fossilen Einsatzstoff wie Erdgas, eine Wassergas-Shift-Einheit zur Erhöhung der Wasserstoffausbeute und eine Wasserstoff-Reinigungsstufe auf Basis einer Druckwechseladsorption (*pressure swing adsorption* - PSA). Typische Reformierungsschritte sind die Reformierung von Erdgas mit Dampf (*steam methane reforming* - SMR), autotherme Reformierung (ATR), partielle Oxidation (POx), Kombinationen davon oder gasbeheizte Reformierung (GHR).

In jedem der genannten Reformierungsschritte und insbesondere bei der Wassergas-Shift-Reaktion fällt Kohlendioxid (CO₂) als Nebenprodukt an. Zur Vermeidung von CO₂-Emissionen sollte dieses Kohlendioxid möglichst effektiv aus dem Verfahren abgeschieden und anschließend entweder einer langfristigen Lagerung (*carbon capture and storage* - CCS) oder einer weiteren Verwertung (*carbon capture and utilization* - CCU) zugeführt werden.

Zur Kohlendioxidabscheidung kommen beispielsweise Gaswäscheverfahren zum Einsatz, in welchen Lösungsmittel das abzuscheidende Gas chemisch binden (chemische Absorption). Ein solches Verfahren ist beispielsweise in der EP 3 362 406 beschrieben. Die für die chemische Absorption verwendeten Lösungsmittel sind in den meisten Fällen wässrige Lösungen von Aminen oder Aminoalkoholen, wie beispielsweise Methyldiethanolamin (MDEA). Aufgrund der starken chemischen Bindung zwischen dem basischen Amin / Aminoalkohol und dem sauren Zielmolekül Kohlendioxid ist ein hoher Energieaufwand erforderlich, um das Lösungsmittel zu regenerieren, also das Lösungsmittel wieder vom chemisch gebunden Kohlendioxid zu befreien. Ferner enthält das vom wässrigen Lösungsmittel befreite Kohlendioxid regelmäßig Mengen von etwa 3 bis 7 % Wasser. Für die meisten CCS oder CCU Anwendungen muss das Wasser jedoch in einem vorgelagerten Schritt entfernt werden. Solche Schritte sind beispielsweise die Trocknung des Kohlendioxids durch Waschen mit Triethylenglycol oder die Adsorption des Wassers an Molekularsieben.

EP 2 683 465 beschreibt ein Verfahren zur Abscheidung von Kohlendioxid, welches eine physikalische Gaswäsche mit der anschließenden Kondensation von Kohlendioxid kombiniert. Für die Kondensation des Kohlendioxids wird ein kohlendioxidreiches Gas in mehreren Schritten bis zum Erreichen des Tripelpunkts gekühlt und komprimiert. Der verflüssigte Kohlendioxid-Strom kann anschließend von den übrigen Gasen abgetrennt werden. Die Kühlung und Komprimierung des Kohlendioxid bis zum Tripelpunkt, zur Abtrennung des Kohlendioxids von den übrigen Gasen, ist apparatetechnisch aufwändig und mit einem hohen Energieaufwand verbunden.

EP 1 804 956 offenbart ein Verfahren zur Rückgewinnung von trockenem Kohlendioxid hoher Reinheit aus einem Wasserstoffproduktionsverfahren. Gemäß diesem Verfahren wird ein unter Druck stehendes, kohlendioxidreiches Gas aus einer Wasserstoffrückgewinnungsstufe zunächst gekühlt und anschließend Kohlendioxid kondensiert. Das verbleibende Kohlendioxid wird anschließend durch physikalische Absorption in Methanol entfernt. Das mit Kohlendioxid beladene Methanol wird durch schrittweise Druckreduktion regeneriert und zu einem Absorber zurückgeführt. Der Nachteil dieses Verfahrens besteht wiederum darin, dass der Großteil des Kohlendioxids durch energieaufwändige und apparatetechnisch aufwändige Kondensation von den übrigen Gasen abgetrennt werden muss.

### Beschreibung der Erfindung

Allgemein ist es eine Aufgabe der vorliegenden Erfindung, die vorgenannten Nachteile des Standes der Technik zu überwinden.

Im Hinblick auf Gasreinigungsverfahren, welche auf chemischer Absorption basieren, besteht eine Aufgabe darin, ein weniger energieintensives Verfahren vorzuschlagen.

Im Hinblick auf bestehende Gasreinigungsverfahren mittels chemischer Absorption besteht eine weitere Aufgabe darin ein Verfahren vorzuschlagen, welches keinen separaten Trocknungsschritt zur Entfernung von Wasser aus dem abgeschiedenen Kohlendioxid erfordert.

Mit steigenden Wasserstoff-Produktionskapazitäten, beispielsweise von mehr als 300 kNm³ pro Stunde, ist ein Einstrang-Verfahren zur Entfernung von Kohlendioxid durch Aminwäsche häufig nicht mehr ausreichend. Dadurch steigen die Investitionskosten. Gleiches gilt für den Energieverbrauch für die Regeneration des Lösungsmittels, welcher üblicherweise intern durch Wärmeübertragung aus heißem Synthesegas oder interne erzeugten Dampf abgedeckt wird. Bei sehr großen Wasserstoffproduktionsanlagen kann es daher notwendig werden, auf externe Energiequellen für die Regeneration von durch chemische Absorption mit Kohlendioxid beladenen Lösungsmitteln zurückzugreifen. Unter "externer" Energiequelle wird dabei eine Energiequelle verstanden, welche Energie aus einem anderen Verfahren oder einer anderen Anlage, jedoch nicht der betreffenden Wasserstoffproduktionsanlage, bereitstellt.

Eine weitere Aufgabe der vorliegenden Erfindung besteht somit darin ein Verfahren vorzuschlagen, welches zur Regeneration des Lösungsmittels auch bei großen Wasserstoffproduktionskapazitäten keine externe Energiequelle erfordert.

Das Verfahren gemäß der EP 2 683 465 erfordert die Regeneration des physikalischen Lösungsmittels mit Dampf, um Kohlendioxid zusammen mit Schwefelwasserstoff zu entfernen und um ein abgeschiedenes Gas mit ausreichendem Kohlendioxidgehalt zu erhalten. Das dadurch an Kohlendioxid gebundene Wasser muss vor der Kompression und Kondensation des Kohlendioxids entfernt werden. Das Verfahren erfordert somit sowohl einen Trocknungsschritt als auch einen energieintensiven Kondensationsschritt. Ferner kann die Kondensation des physikalischen Absorptionsmittels, beispielsweise Methanol, vorgesehen sein.

Eine weitere Aufgabe der vorliegenden Erfindung besteht somit darin ein Verfahren vorzuschlagen, welches keinen Trocknungsschritt zur Entfernung von Wasser und keinen Kondensationsschritt bezüglich des abgeschiedenen Kohlendioxids erfordert.

Allgemein ist es auch eine weitere Aufgabe der Erfindung, ein Verfahren zur Abscheidung von Kohlendioxid vorzuschlagen, bei welchem Kohlendioxid als (Neben-)Produkt in hoher Reinheit bei gleichzeitig niedrigen Betriebskosten (OPEX) und/oder Investitionskosten (CAPEX) anfällt.

Eine weitere Aufgabe der vorliegenden Erfindung besteht darin eine Anlage vorzuschlagen, welche zumindest eine der vorgenannten Aufgaben zumindest teilweise löst.

Eine weitere Aufgabe der vorliegenden Erfindung besteht darin eine Verwendung eines Verfahrens oder einer Anlage vorzuschlagen, welche zumindest eine der vorgenannten Aufgaben zumindest teilweise löst.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zum Entfernen von Kohlendioxid (CO₂) aus Synthesegas, wobei das Synthesegas zumindest Wasserstoff (H₂), Kohlenmonoxid (CO), Kohlendioxid (CO₂), sowie Wasser (H₂O) beinhaltet, umfassend die folgenden Verfahrensschritte:
(a) Bereitstellen eines hygroskopischen, physikalisch wirkenden Absorptionsmittels;
(b) Zumindest teilweises Entfernen von Wasser aus dem Synthesegas durch Kühlen des Synthesegases unter den Taupunkt von Wasser und Abscheiden des kondensierten Wassers;
(c) Kühlen des Absorptionsmittels;
(d) Entfernen von Kohlendioxid aus dem gekühlten Synthesegas durch das gekühlte Absorptionsmittel in einem physikalischen Absorptionsschritt bei erhöhtem Druck, wobei das gekühlte Synthesegas und das gekühlte Absorptionsmittel im Gegenstrom geführt werden, wobei zumindest teilweise von Wasser und Kohlendioxid befreites Synthesegas erhalten wird, sowie mit Kohlendioxid und teilweise mitabsorbiertem Kohlenmonoxid und Wasserstoff beladenes Absorptionsmittel erhalten wird;
(e) Ausschleusen des zumindest teilweise von Wasser und Kohlendioxid befreiten Synthesegases aus dem Verfahren;
(f) Behandeln des beladenen Absorptionsmittels in einer Mehrzahl hintereinander geschalteter flash-Stufen, wobei in zumindest einer ersten flash-Stufe mitabsorbiertes Kohlenmonoxid und Wasserstoff aus dem beladenen Absorptionsmittel entfernt wird, und in einer der ersten flash-Stufe nachgeschalteten flash-Stufe Kohlendioxid aus dem beladenen Absorptionsmittel entfernt wird;
(g) Verdichten auf Absorptionsdruck und Rückführen des in Schritt (f) erhaltenen Kohlenmonoxid und Wasserstoff zu Schritt (d);
(h) Ausschleusen des in Schritt (f) erhaltenen Kohlendioxid aus dem Verfahren.

Die vorgenannten Schritte (a) bis (h) müssen nicht zwangsläufig in der genannten Reihenfolge durchgeführt werden.

Die Verwendung eines physikalischen Absorptionsmittels ermöglicht dessen Regeneration nach der Absorption von Kohlendioxid durch einen einfachen, nicht energieintensiven flash-Schritt. Dabei werden vom Absorptionsmittel zwangsläufig und nicht vermeidbar mitabsorbierte Wertgase (Wasserstoff, Kohlenmonoxid) in zumindest einer ersten flash-Stufe entfernt. Das so teilregenerierte Absorptionsmittel wird einer der ersten flash-Stufe nachgeschalteten flash-Stufe zugeführt. Zu diesem Zeitpunkt enthält das beladene Absorptionsmittel hauptsächlich noch Kohlendioxid als absorbierte Gaskomponente und gegebenenfalls nicht in Schritt (b) entferntes Wasser. Das in der nachgeschalteten flash-Stufe desorbierte Gas enthält daher nahezu ausschließlich Kohlendioxid.

Unter "Flashen", einen "flash-Schritt" oder eine "flash-Stufe" versteht der Fachmann die Regeneration des Absorptionsmittels, also Desorption physikalisch gebundener Gase aus dem Absorptionsmittel, durch Druckabsenkung.

Die Absorption von Kohlendioxid in einem physikalisch wirkenden, hygroskopischen Absorptionsmittel und anschließende Regeneration durch Druckabsenkung reicht aus, um hohe Kohlendioxidabscheidungsraten aus dem Synthesegas zu erzielen. Insbesondere reicht dieses Vorgehen aus, um hohe Kohlendioxidabscheidungsraten aus einem wasserstoffreichen Synthesegas zu erzielen. Insbesondere wird ein wasserstoffreiches Synthesegas durch eine Wassergas-Shift (WGS) von standardmäßig produziertem Synthesegas erhalten.

Im Vergleich zur chemischen Absorption von Kohlendioxid an basischen, insbesondere aminischen Lösungsmitteln, wird in einem flash-Schritt keine Energie zur Entfernung des Kohlendioxids vom Absorptionsmittel benötigt. Dies führt zu einer Reduktion der Betriebskosten der Anlage (OPEX). Gleichzeitig sinken auch die Investitionskosten, da weniger Anlagenbauteile wie Heißregenerationskolonnen, Wärmeaustauscher für beladenes/regeneriertes Lösungsmittel und Aufkocher benötigt werden.

Durch die Verwendung eines hygroskopischen Lösungsmittels als Absorptionsmittel bleibt gegebenenfalls bei der Kondensation gemäß Schritt (b) nicht entferntes Wasser auch bei der Behandlung gemäß Schritt (f) an das Absorptionsmittel gebunden. Das in Schritt (f) vom Absorptionsmittel desorbierte Kohlendioxid ist somit trocken in dem Sinne, dass es kein gebundenes Wasser aufweist. Ferner wird gegebenenfalls bei der Kondensation gemäß Schritt (b) nicht entferntes Wasser bei der Absorption gemäß Schritt (d) vom Absorptionsmittel aufgenommen, indem es im hygroskopischen Absorptionsmittel gelöst wird.

Unter einem hygroskopischen Absorptionsmittel wird im Sinne der vorliegenden Erfindung ein Absorptionsmittel verstanden, welches für Wasser ein hohes Aufnahmevermögen aufweist. Insbesondere weist das hygroskopische Absorptionsmittel eine hohe Löslichkeit für Wasser auf. Insbesondere ist das hygroskopische Absorptionsmittel in jedem Verhältnis mit Wasser mischbar.

Unter einem physikalisch wirkenden Absorptionsmittel wird ein Absorptionsmittel verstanden, bei dem die Löslichkeit der absorbierten Gase im Absorptionsmittel durch physikalische Wechselwirkungen bewirkt werden. Insbesondere wird die Absorption im physikalisch wirkenden Absorptionsmittel nicht durch chemische Wechselwirkungen bewirkt, wie beispielsweise eine Säure-Base-Wechselwirkung, insbesondere eine Wechselwirkung im Sinne einer Bindung einer Lewis-Säure an eine Lewis-Base.

Die Absorption von Kohlendioxid im hygroskopischen, physikalisch wirkenden Absorptionsmittel gemäß Schritt (d) wird bei erhöhtem Druck durchgeführt. Insbesondere wird der Absorptionsschritt (d) bei einem Absolut-Druck von 10 bis 100 bar durchgeführt, vorzugsweise bei 20 bis 60 bar. Ein dadurch resultierender hoher Kohlendioxid-Partialdruck (Absorption unter hohem Druck) begünstigt die physikalische Absorption durch das Absorptionsmittel, während die Absorptionskapazität bei einer chemischen Absorption alleine von der Menge oder Konzentration des angebotenen Absorptionsmittels abhängt. Bei einer Absorption durch chemische Absorptionsmittel kann die Absorptionskapazität somit nicht durch die Erhöhung des Drucks gesteigert werden.

Zur Verbesserung der Absorptionskapazität des Absorptionsmittels wird das Absorptionsmittel gemäß Schritt (c) gekühlt. Die Zieltemperatur beim Kühlen des Absorptionsmittels hängt dabei von den physikalischen Eigenschaften des Absorptionsmittels ab, wie beispielsweise
- dem Schmelzpunkt,
- der Temperaturabhängigkeit von der Viskosität, und
- der Abhängigkeit der Kohlendioxid-Absorptionskapazität von der Temperatur.

Wird beispielsweise N-Methyl-2-pyrrolidon (NMP) als Absorptionsmittel verwendet, wird dieses auf eine Temperatur von nicht weniger als 0 °C gekühlt. Wird beispielsweise Methanol als Absorptionsmittel verwendet, wird dieses auf eine Temperatur von vorzugsweise weniger als - 30 °C gekühlt.

Das erfindungsgemäße Verfahren weist ferner den Vorteil auf, dass die Hauptmenge des im Synthesegas vorhanden Wassers in Schritt (b) durch Kondensation entfernt wird, bevor die Trennung des Kohlendioxids von den übrigen Gasbestandteilen des Synthesegases beginnt. Da im Verlaufe des weiteren Verfahrens kein Wasser als Prozessmedium benötigt wird, sind anschließend nur kleinere Mengen an Wasser aus dem Prozess zu entfernen. Dieses Restwasser bleibt wie oben erwähnt an das hygroskopische Absorptionsmittel gebunden und kann gegebenenfalls durch ein thermisches Trennverfahren (Destillation, Rektifikation) von diesem befreit werden.

Eine Ausführungsform des erfindungsgemäßen Verfahrens ist daher dadurch gekennzeichnet, dass in einem Schritt (f) nachgeschalteten Destillationsschritt Wasser aus dem Absorptionsmittel entfernt wird.

Nicht in Schritt (b) durch Kondensation aus dem Synthesegas entferntes Wasser reichert sich gegebenenfalls über einen längeren Zeitraum während der Durchführung es Verfahrens im Absorptionsmittel an. Um eine hohe Absorptionskapazität des Absorptionsmittels zu erhalten, wird das Wasser vorzugsweise in einem Schritt (f) nachgeschalteten Destillationsschritt entfernt. Vorzugsweise handelt es sich bei dem Destillationsschritt um einen Rektifikationsschritt in einer Rektifikationskolonne.

Nicht in Schritt (b) durch Kondensation entferntes Wasser wird hauptsächlich im Absorptionsschritt gemäß Schritt (d) vom Absorptionsmittel aufgenommen. Im strengen Sinne handelt es sich hier nicht um eine physikalische Absorption, sondern das Wasser wird im Absorptionsmittel gelöst. In einer Ausführungsform kann für diesen Lösevorgang eine dedizierte Absorptionsstufe vorgesehen sein, die getrennt von dem Absorptionsschritt gehalten ist, in welchem gemäß Schritt (d) die Hauptmenge des Kohlendioxids durch Absorptionsmittel aufgenommen wird. Eine Ausführungsform des erfindungsgemäßen Verfahrens ist daher dadurch gekennzeichnet, dass Wasser durch gekühltes Absorptionsmittel in einem weiteren physikalischen Absorptionsschritt bei erhöhtem Druck entfernt wird. Alternativ formuliert ist eine Ausführungsform des erfindungsgemäßen Verfahrens ist dadurch gekennzeichnet, dass Wasser durch gekühltes Absorptionsmittel in einem weiteren Schritt durch Lösen im Absorptionsmittel bei erhöhtem Druck entfernt wird.

In einer Ausführungsform wird auch das in Schritt (b) durch Kondensation erhaltene Wasser dem Schritt (f) nachgeschalteten Destillationsschritt zugeführt und zusammen mit im Absorptionsmittel angereicherten Wasser entfernt. Dadurch wird für die gesamte thermische Trennung von Wasser und Absorptionsmittel nur eine einzige Rektifikationskolonne für das Verfahren benötigt. Gemäß einer weiteren Ausführungsform wird auch in der gegebenenfalls für die Absorption oder Lösung von Wasser vorhandenen dedizierten Absorptionsstufe absorbiertes oder gelöstes Wasser dem Schritt (f) nachgeschalteten Destillationsschritt zugeführt.

Eine Ausführungsform des erfindungsgemäßen Verfahrens ist dadurch gekennzeichnet, dass der Destillationsschritt zur Entfernung von Wasser temporär betrieben wird, insbesondere temporär infolge eines Überschreitens einer Grenzkonzentration von Wasser im Absorptionsmittel betrieben wird.

Durch diese Maßnahme kann weiter Energie eingespart werden. Da sich Wasser über die Zeit nur langsam im Absorptionsmittel anreichert und die Absorptionskapazität dadurch nur langsam sinkt, kann es ausreichend sein den Destillationsschritt zur Entfernung von Wasser nur temporär zu betreiben. Unter "temporär" ist dabei zu verstehe, dass der Destillationsschritt zu bestimmten Zeiten während der Ausführung des Verfahrens ausgeführt wird und zu bestimmten Zeiten nicht. Letzteres ist beispielsweise durch eine entsprechende bypass-Anordnung von Leitungen und weiteren Bauteilen möglich.

Eine Ausführungsform des erfindungsgemäßen Verfahrens ist dadurch gekennzeichnet, dass im Destillationsschritt erhaltene Absorptionsmitteldämpfe als Stripp-Medium zum Entfernen von Kohlendioxid in der nachgeschalteten flash-Stufe gemäß Schritt (f) genutzt werden.

In dem Schritt (f) nachgeschalteten Destillationsschritt zur Abtrennung von Wasser vom Absorptionsmittel fallen Absorptionsmitteldämpfe an. In einer Ausführungsform fallen diese Absorptionsmitteldämpfe als Kopfprodukt an, beispielsweise wenn das Absorptionsmittel einen niedrigeren Siedepunkt aufweist als Wasser. Anstatt diese Absorptionsmitteldämpfe zu kondensieren und als gekühltes, flüssiges Absorptionsmittel zu Schritt (d) zurückzuführen, werden diese gemäß dieser Ausführungsform als Stripp-Medium zum Entfernen des Kohlendioxids in der nachgeschalteten flash-Stufe gemäß Schritt (f) genutzt. Dadurch kann die Menge an abgeschiedenem Kohlendioxid weiter gesteigert werden, ohne dass es eines zusätzlichen Energieaufwandes bedarf. Entgegen der Erwartung wurde ferner gefunden, dass die heißen Absorptionsmitteldämpfe die Effizienz des gesamten Verfahrens, welches grundsätzlich auf die Absorption von Kohlendioxids in einem kalten oder tiefkalten Absorptionsmittel ausgelegt ist, nicht verringern. Insbesondere wird die Gesamtleistung der Anlage in Bezug auf die Kältebilanz (Kälteleistung und Kühlwasser) nicht negativ beeinflusst. Ferner besteht der Vorteil, dass die im Destillationsschritt erhaltenen Absorptionsmitteldämpfe chemisch dem Absorptionsmittel entsprechen. Dadurch wird in das Absorptionsmittel kein "fremdes" Stripp-Medium eingebracht, welches anschließend aus dem ausgestrippten Gas zu entfernen ist.

Unter einem Stripp-Medium wird im Sinne der vorliegenden Erfindung ein Medium verstanden, welches während eines flash-Schritts in das beladene Absorptionsmittel eingetragen wird, beispielsweise eingeleitet wird, und an das Absorptionsmittel gebundene Gasbestandteile, vorzugsweise Kohlendioxid, vom Absorptionsmittel verdrängt.

Die Absorptionsmitteldämpfe werden als Stripp-Medium in dem Sinne genutzt, dass die Absorptionsmitteldämpfe in das beladene Absorptionsmittel eingebracht, insbesondere eingeleitet werden. Dabei wird das beladene Absorptionsmittel nicht bis zu dessen Siedepunkt oder Siedetemperatur erhitzt. In einer Ausführungsform wird das beladene Absorptionsmittel auf eine Temperatur erhitzt, die mindestens 10 K unterhalb der Siedetemperatur des Absorptionsmittels liegt, oder auf eine Temperatur die mindestens 15 K unterhalb der Siedetemperatur des Absorptionsmittels liegt, oder auf eine Temperatur die mindestens 20 K unterhalb der Siedetemperatur des Absorptionsmittels liegt.

Zusätzlich oder alternativ zur Nutzung der Absorptionsmitteldämpfe als Strippmedium kann das beladene Absorptionsmittel vor oder während dem Behandeln in der Mehrzahl hintereinander geschalteter flash-Stufen durch eine interne und/oder externe Energiequelle aufgewärmt werden. Die interne und/oder externe Energiequelle ist unabhängig von den Absorptionsmitteldämpfen als Energiequelle, das heißt die Absorptionsmitteldämpfe beinhalten keine Energie aus der internen und/oder externen Energiequelle. Insbesondere wird das beladene Absorptionsmittel durch Wärmetausch mit einem heißen internen oder externen Prozessmedium erwärmt. Dadurch kann die durch Schritt (f) aus dem beladenen Absorptionsmittel entfernte Menge an Kohlenmonoxid, Wasserstoff und Kohlendioxid weiter erhöht werden.

In einer Ausführungsform wird das beladene Absorptionsmittel ausschließlich vor oder während der nachgeschalteten flash-Stufe durch die interne und/oder externe Energiequelle aufgewärmt. Da Kohlenmonoxid und Wasserstoff an viele Absorptionsmittel, insbesondere Methanol, nur schwach binden, ist ein Erwärmen der zumindest ersten flash-Stufe durch eine interne und/oder externe Energiequelle nicht zwingend erforderlich.

Durch Schritt (f) wird ein zumindest teilweise regeneriertes Absorptionsmittel erhalten, welches im Wesentlichen nur noch Wasser als "Verunreinigung" enthält. In einer Ausführungsform wird das in der nachgeschalteten flash-Stufe erhaltene, zumindest teilregenerierte Absorptionsmittel dem Schritt (f) nachgeschalteten Destillationsschritt zugeführt. Wird das beladene Absorptionsmittel vor oder während der Behandlung gemäß Schritt (f) erwärmt, kann diese Erwärmung gemäß einer Ausführungsform durch einen Teil, also einen Teilstrom des Synthesegases als interne Energiequelle erfolgen. Dieser Teil des Synthesegases wird nicht gemäß Schritt (b) gekühlt. Die Kühlung dieses Teils des Synthesegases erfolgt vielmehr durch die Wärmeübertragung vom Synthesegas auf das zu erwärmende beladene Absorptionsmittel. Dadurch wird die Wärmeintegration des Verfahrens verbessert.

Eine Ausführungsform des erfindungsgemäßen Verfahrens ist dadurch gekennzeichnet, dass im Destillationsschritt erhaltene Absorptionsmitteldämpfe kondensiert und das kondensierte Absorptionsmittel anschließend im Absorptionsschritt gemäß Schritt (d) wiederverwendet wird.

Eine Ausführungsform des erfindungsgemäßen Verfahrens ist dadurch gekennzeichnet, dass die nachgeschaltete flash-Stufe gegenüber der ersten flash-Stufe einen niedrigeren Druck aufweist.

In einer Ausführungsform weist die erste flash-Stufe zur Entfernung von mitabsorbiertem Kohlenmonoxid und Wasserstoff einen Druck von 10 bis 25 bar auf, vorzugsweise von 15 bis 20 bar auf, besonders bevorzugt von 18 bar auf. In einer Ausführungsform weist Schritt (f) eine zweite flash-Stufe zur Entfernung von mitabsorbiertem Kohlenmonoxid und Wasserstoff auf. In einer Ausführungsform weist die zweite flash-Stufe einen Druck von 5 bis 12 bar auf, vorzugsweise von 6 bis 10 bar auf, besonders bevorzugt von 8 bar auf. In einer Ausführungsform weist die nachgeschaltete flash-Stufe einen Druck von 1 bis 2 bar auf, vorzugsweise von 1,1 bis 1,5 bar, besonders bevorzugt von 1,3 bar. In einer Ausführungsform weist die nachgeschaltete flash-Stufe einen Druck unter Atmosphärendruck auf, beispielsweise einen Druck von 0,1 bis 1 bar. Durch Unterdruck in der nachgeschalteten flash-Stufe kann die Menge an abgeschiedenem Kohlendioxid weiter erhöht werden.

Eine Ausführungsform des erfindungsgemäßen Verfahrens ist dadurch gekennzeichnet, dass in der nachgeschalteten flash-Stufe erhaltenes Absorptionsmittel zur erneuten Absorption von Kohlendioxid zum physikalischen Absorptionsschritt gemäß Schritt (d) zurückgeführt wird.

Eine Ausführungsform des erfindungsgemäßen Verfahrens ist dadurch gekennzeichnet, dass das Synthesegas in einem dem Verfahren vorgeschalteten Verfahrensschritt einer Wassergas-Shift-Reaktion zur Erhöhung der Wasserstoffausbeute unterzogen wird, wobei sich das Synthesegas mit Wasser und Kohlendioxid anreichert.

Eine Ausführungsform des erfindungsgemäßen Verfahrens ist dadurch gekennzeichnet, dass das Synthesegas keine Schwefelverbindungen als Verunreinigungen aufweist, insbesondere keinen Schwefelwasserstoff (H₂S) und/oder kein Carbonylsulfid (COS) als Verunreinigung aufweist.

Eine Ausführungsform des erfindungsgemäßen Verfahrens ist dadurch gekennzeichnet, dass das Synthesegas keinen Cyanwasserstoff (HCN) und/oder kein Ammoniak (NH₃) als Verunreinigung aufweist.

Das Synthesegas wird vorzugsweise durch Dampfreformierung (SMR), partielle Oxidation (POX), autotherme Reformierung (ATR), gasbeheizte Reformierung (GHR), oder Kombinationen davon, von gasförmigen kohlenstoffhaltigen Einsatzstoffen, vorzugsweise Erdgas, hergestellt. Vorzugsweise wurde der kohlenstoffhaltige Einsatzstoff einer Hydrodesulfurierung unterzogen. So erzeugte Synthesegase enthalten keine der vorgenannten Schwefelverbindungen und/oder sich von molekularem Stickstoff (N₂) unterscheidende Stickstoffverbindungen als Verunreinigungen. In einer Ausführungsform weist das Synthesegas darüber hinaus bei der Synthesegaserzeugung nicht reagiertes Methan oder andere höhere homologe Kohlenwasserstoffe auf, welche nicht zu Synthesegas umgesetzt wurden.

Eine Ausführungsform des erfindungsgemäßen Verfahrens ist dadurch gekennzeichnet, dass das Verfahren keinen Heißregenerationsschritt zur Regenerierung des beladenen Absorptionsmittels umfasst. Insbesondere die vorgenannten Schwefelverbindungen, insbesondere Schwefelwasserstoff (H₂S), werden üblicherweise durch einen energieintensiven Heißregenerationsschritt entfernt. Schwefelwasserstoff weist in Bezug auf viele Absorptionsmittel, insbesondere Methanol, einen hohen Absorptionskoeffizienten auf. Das erfindungsgemäße Verfahren erfordert einen solchen Heißregenerationsschritt nicht. Es ist dadurch besonders energiesparend und weist somit niedrige Betriebskosten (OPEX) auf. Da ein Heißregenerationsschritt eine dedizierte Kolonne erfordert, sind auch die Investitionskosten (CAPEX) für das erfindungsgemäße Verfahren niedrig.

Unter "Heißregeneration" wird im Sinne der vorliegenden Erfindung ein Verfahrensschritt verstanden, welcher die Desorption absorbierter Gase unter Eintrag von Wärme in das beladene Absorptionsmittel umfasst, wobei das Absorptionsmittel durch Eintrag von Wärme zum Sieden erhitzt wird. Der vorgenannte Eintrag von Absorptionsmitteldämpfen in beladenes Absorptionsmittel ist explizit nicht als Heißregeneration zu verstehen, da das Absorptionsmittel dadurch lediglich auf eine Temperatur unterhalb seiner Siedetemperatur erwärmt wird.

Eine Ausführungsform des erfindungsgemäßen Verfahrens ist dadurch gekennzeichnet, dass das Kohlendioxid nach dem Ausschleusen aus dem Verfahren gemäß Schritt (h) keinem Trocknungsschritt unterzogen wird.

Wie oben erwähnt erfordert das erfindungsgemäße Verfahren keinen Trocknungsschritt für das gemäß Schritt (h) aus dem Verfahren ausgeschleuste Kohlendioxid. Die Hauptmengen an Wasser wird aus dem Synthesegas durch Kühlen des Synthesegases unter den Taupunkt von Wasser und Kondensation des Wassers gemäß Schritt (b) entfernt. Durch diesen Schritt nicht entferntes Wasser wird durch das hygroskopische Absorptionsmittel aufgenommen und gegebenenfalls in einem weiteren Schritt durch Destillation aus dem Absorptionsmittel entfernt. Zusätzliches Prozesswasser oder zusätzlicher Prozessdampf ist, im Gegensatz zu einem Verfahren mit chemischer Absorption, bei welcher Wasser und/oder ein Wasser/Amin-Gemisch als Stripp-Medium verwendet wird, nicht vorgesehen.

Eine Ausführungsform des erfindungsgemäßen Verfahrens ist dadurch gekennzeichnet, dass das Kohlendioxid keinem Kondensationsschritt unterzogen wird, insbesondere nach dem Ausschleusen aus dem Verfahren gemäß Schritt (h) keinem Kondensationsschritt unterzogen wird.

Das erfindungsgemäße Verfahren erfordert keinen energieintensiven und apparatetechnisch aufwändigen Kondensationsschritt für Kohlendioxid, um dieses von den anderen Gasbestanteilen abzutrennen. Durch die Kombination der erfindungsgemäßen Verfahrensschritte wird ein reines und wasserfreies (trockenes) Kohlendioxid-Produkt erhalten, ohne dass bezüglich des Kohlendioxids ein Kondensationsschritt erforderlich wäre.

Eine Ausführungsform des erfindungsgemäßen Verfahrens ist dadurch gekennzeichnet, dass das bereitgestellte hygroskopische, physikalisch wirkende Absorptionsmittel Methanol beinhaltet, oder im Wesentlichen aus Methanol besteht, oder aus Methanol besteht. Das hygroskopische, physikalisch wirkende Absorptionsmittel beinhaltet vorzugsweise wenigstens 90 Vol.-% Methanol, oder wenigstens 95 Vol.-% Methanol, oder wenigstens 99 Vol.-% Methanol, oder wenigstens 99,5 Vol.-% Methanol, oder wenigstens 99,9 Vol.-% Methanol.

Methanol bietet den Vorteil, dass es bezüglich Kohlendioxid einen sehr hohen Absorptionskoeffizienten aufweist, welcher mit steigendem Druck und sinkender Temperatur größer wird. Es ist in jedem Verhältnis mit Wasser mischbar und weist auch bei sehr niedrigen Temperaturen eine niedrige Viskosität auf. Es kann daher problemlos bei Temperaturen von weniger als -30 °C (minus dreißig Grad Celsius) als Absorptionsmittel verwendet werden.

Eine Ausführungsform des erfindungsgemäßen Verfahrens ist dadurch gekennzeichnet, dass das bereitgestellte hygroskopische, physikalisch wirkende Absorptionsmittel N-Methyl-2-pyrrolidon (NMP) beinhaltet, oder im Wesentlichen aus NMP besteht, oder aus NMP besteht. Das hygroskopische, physikalisch wirkende Absorptionsmittel beinhaltet vorzugsweise wenigstens 90 Vol.-% NMP, oder wenigstens 95 Vol.-% NMP, oder wenigstens 99 Vol.-% NMP, oder wenigstens 99,5 Vol.-% NMP.

Eine Ausführungsform des erfindungsgemäßen Verfahrens ist dadurch gekennzeichnet, dass das Kohlendioxid nach Ausschleusen aus dem Verfahren gemäß Schritt (h) verdichtet und optional verflüssigt wird, und anschließend gelagert wird oder einer weiteren Verwendung zugeführt wird. Bevor das Kohlendioxid einer Langzeitlagerung zugeführt wird, wird es üblicherweise verdichtet. Dies ist regelmäßig auch dann erforderlich, wenn das Kohlendioxid einer weiteren Verwendung zugeführt werden soll, beispielsweise für eine Zwischenlagerung in Drucktanks.

Eine Ausführungsform des erfindungsgemäßen Verfahrens ist dadurch gekennzeichnet, dass ein Inertgas, insbesondere Stickstoff (N₂), als Stripp-Medium zum Entfernen von Kohlendioxid in der nachgeschalteten flash-Stufe gemäß Schritt (f) genutzt wird.

Dadurch kann die Ausbeute an abgeschiedenem Kohlendioxids weiter erhöht werden.

Gemäß einer Ausführungsform des erfindungsgemäßen Verfahrens wird ein Teil des in Schritt (f) erhaltenen Wasserstoffs und Kohlenmonoxids als Brennstoff verwendet wird, insbesondere als Brennstoff für die Herstellung des bereitgestellten Synthesegases. Dieser Teil des in zumindest der ersten flash-Stufe erhaltenen Wasserstoffs und Kohlenmonoxids wird nicht zum Absorptionsschritt gemäß Schritt (d) zurückgeführt.

Die Aufgaben der Erfindung werden ferner zumindest teilweise gelöst durch eine Anlage zum Entfernen von Kohlendioxid (CO₂) aus Synthesegas, wobei das Synthesegas zumindest Wasserstoff (H₂), Kohlenmonoxid (CO), Kohlendioxid (CO₂), sowie Wasser (H₂O) beinhaltet, umfassend die folgenden miteinander in Fluidverbindung stehenden Anlagenkomponenten:
(a) Mittel zum Kühlen des Synthesegases unter den Taupunkt von Wasser;
(b) Mittel zum Abscheiden von aus dem Synthesegas auskondensierten Wassers;
(c) Mittel zum Kühlen eines hygroskopischen, physikalisch wirkenden Absorptionsmittels;
(d) Eine Absorptionskolonne zum Führen des gekühlten, von Wasser befreiten Synthesegases und des gekühlten Absorptionsmittels bei erhöhtem Druck im Gegenstrom, zur Entfernung von Kohlendioxid aus dem Synthesegas, wobei zumindest teilweise von Wasser und Kohlendioxid befreites Synthesegas erhältlich ist, sowie mit Kohlendioxid und teilweise mitabsorbiertem Kohlenmonoxid und Wasserstoff beladenes Absorptionsmittel erhältlich ist;
(e) Mittel zum Ausschleusen des von Wasser und Kohlendioxid befreiten Synthesegases aus der Anlage;
(f) Eine Mehrzahl hintereinander geschaltete flash-Stufen, beinhaltend eine erste flash-Stufe zur Entfernung des mitabsorbierten Kohlenmonoxid und Wasserstoff aus dem beladenen Absorptionsmittel, sowie beinhaltend eine der ersten flash-Stufe nachgeschaltete flash-Stufe zur Entfernung von Kohlendioxid aus dem beladenen Absorptionsmittel;
(g) Ein Kompressor zum Verdichten von aus beladenem Absorptionsmittel entferntem Kohlenmonoxid und Wasserstoff und zum Rückführen des verdichteten Kohlenmonoxid und Wasserstoff zur Absorptionskolonne (c);
(h) Mittel zum Ausschleusen von aus beladenem Absorptionsmittel entferntem Kohlendioxid aus der Anlage.

Die Anlage ist insbesondere Teil einer größeren Anlage oder eines Anlagenkomplexes zur Herstellung von Wasserstoff.

Eine Ausführungsform der erfindungsgemäßen Anlage ist dadurch gekennzeichnet, dass der Mehrzahl hintereinander geschalteter flash-Stufen (f) eine Destillationsvorrichtung zur Entfernung von Wasser aus dem Absorptionsmittel nachgeschaltet ist.

Eine Ausführungsform der erfindungsgemäßen Anlage ist dadurch gekennzeichnet, dass die Anlage Mittel zum Abziehen von Absorptionsmitteldämpfen aus der Destillationsvorrichtung und Mittel zum Einleiten der Absorptionsmitteldämpfe in die der ersten flash-Stufe nachgeschalteten flash-Stufe zur Verwendung der Absorptionsmitteldämpfe als Stripp-Medium beinhaltet.

Die Aufgaben der Erfindung werden ferner zumindest teilweise gelöst durch eine Verwendung des erfindungsgemäßen Verfahrens oder der erfindungsgemäßen Anlage zur Abscheidung von Kohlendioxid aus schwefelfreiem Synthesegas.

### Ausführungsbeispiel

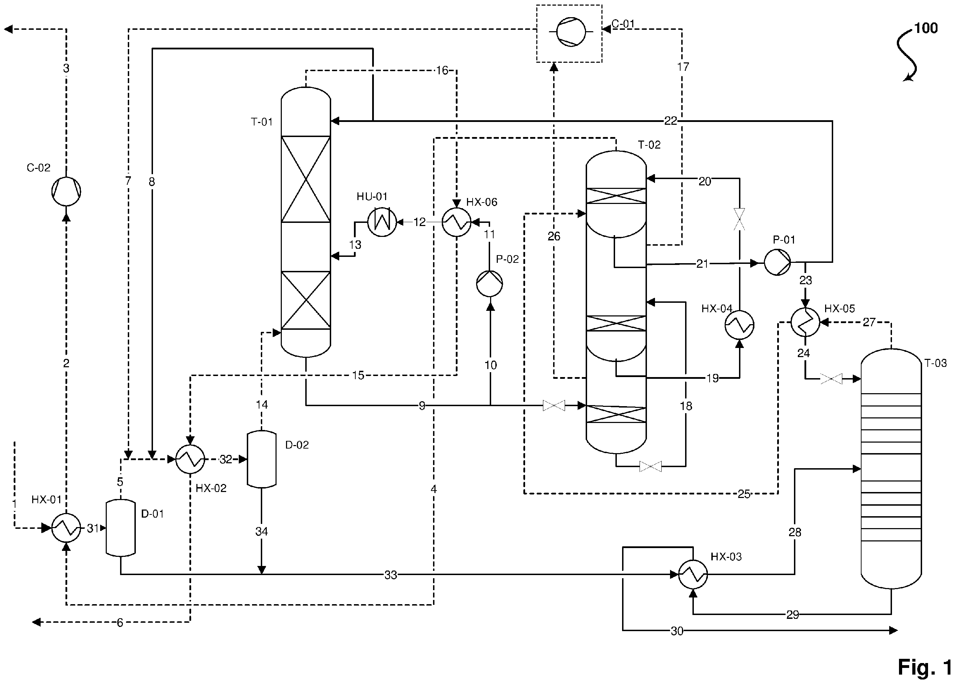

Figur 1 zeigt ein vereinfachtes Verfahrensfließbild einer möglichen Ausgestaltung eines erfindungsgemäßen Verfahrens 100 oder einer erfindungsgemäßen Anlage 100. Absorptionsmittel ist gemäß dieser Ausgestaltung Methanol. Im Verfahrensfließbild sind Gas-Ströme durch gestrichelte Linien dargestellt und Flüssigkeits-Ströme durch durchgezogene Linien dargestellt. Die Flussrichtung des jeweiligen Stroms ist durch Pfeile angedeutet.

Synthesegas aus einer Reformereinheit (ATR, SMR, POx, GHR oder Kombinationen davon), welches ferner in einer der Reformereinheit nachgeschalteten Wassergas-Shift-Einheit (beides nicht gezeigt) behandelt wurde, wird über Leitung 1 herangeführt und zunächst in Wärmeaustauscher HX-01 mit Hilfe eines Kohlendioxid-Stroms aus Leitung 4 unter den Taupunkt von Wasser abgekühlt. Das gekühlte Synthesegas wird über Leitung 31 weitergeführt und kondensiertes Wasser wird aus dem Synthesegas in Abscheider D-01 abgeschieden. Synthesegas und nicht kondensiertes Wasser wird über Leitung 5 weitergeführt und in Wärmeaustauscher HX-02 weiter auf eine Temperatur von -10 °C gegen gereinigtes Synthesegas aus Leitung 16 abgekühlt. Um die Bildung von Eis in Leitung 5 zu verhindern, wird über Leitung 8 Methanol zugeführt. In Wärmeaustauscher HX-02 auf -10 °C abgekühltes Synthesegas wird über Leitung 32 weitergeführt und in Abscheider D-02 eine weitere Menge Wasser aus dem Synthesegas abgeschieden, welche über Leitung 34 der Leitung 33 zugeführt wird.

Das weitgehend von Wasser befreite und abgekühlte Synthesegas wird über Leitung 14 weitergeführt und Absorptionskolonne T-01 zugeführt, in welcher es einem physikalischen Absorptionsschritt unterzogen wird. Absorptionskolonne T-01 wird bei einem Absorptionsdruck von 40 bar betrieben. In Absorptionskolonne T-01 wird kaltes Methanol als Absorptionsmittel aus den Leitungen 13 und 22 von oben nach unten geführt, während das Synthesegas aus Leitung 14 im Gegenstrom von unten nach oben geführt wird, wobei hauptsächlich Kohlendioxid in Methanol absorbiert wird sowie kleinere Mengen Wertgase (Kohlenmonoxid und Wasserstoff) in Methanol mitabsorbiert (co-absorbiert) werden. Gleichzeitig werden gegebenenfalls nicht in den Abscheidern D-01 und D-02 kondensierte Restmengen an Wasser in der Absorptionskolonne T-01 im Methanol gelöst. Gereinigtes, das heißt weitgehend von Wasser und Kohlendioxid befreites Synthesegas wird aus der Absorptionskolonne T-01 über Leitung 16 abgezogen. Das Synthesegas kühlt anschließend eine Teilmenge von aus Leitung 9 mit Hilfe von Pumpe P-02 aus Leitung 10 abgezweigtem und über Leitung 11 weitergeführtem beladenem Methanol in Wärmeaustauscher HX-06. Das gereinigte Synthesegas wird anschließend über Leitung 15 weitergeführt und kühlt in Wärmeaustauscher HX-02 das unbehandelte Synthesegas aus Leitung 5. Das gereinigte Synthesegas wird anschließend über Leitung 6 aus dem Verfahren abgezogen. Es wird optional einem weiteren Reinigungsschritt zugeführt, beispielsweise einer Druckwechseladsorptionsanlage (*pressure swing adsorption-* PSA) zur Produktion von reinem Wasserstoff, und anschließend einer weiteren Verwendung zugeführt, beispielsweise einer Methanol- oder Ammoniaksynthese.

Im Sumpfbereich der Absorptionskolonne T-01 wird beladenes Methanol über Leitung 9 abgezogen. Das beladene Methanol enthält Kohlendioxid, sowie in kleineren Mengen mitabsorbierte Wertgase (Kohlenmonoxid und Wasserstoff) als absorbierte Gaskomponenten. Ein Teil des beladenen Methanols wird aus Leitung 9 über Leitung 10 mit Hilfe von Pumpe P-02 abgezweigt, über Leitung 11 weitergeführt und in Wärmeaustauscher HX-06 gegen gereinigtes Synthesegas aus Leitung 16 gekühlt. Es wird anschließend über Leitung 12 weitergeführt und in Kältemittel-Kühler HU-01 auf -35 °C gekühlt. Das gekühlte beladene Methanol wird anschließend über Leitung 13 weitergeführt und zur erneuten Absorption von Kohlendioxid in Absorptionskolonne T-01 eingespeist.

Der Hauptanteil des beladenen Methanols wird über Leitung 9 in die Flash-Kolonne T-02 eingespeist. Dabei wird der Druck über das in Leitung 9 angeordnete Druckminderungsventil zunächst auf 18 bar gesenkt. Im unteren Teil der Flash-Kolonne werden aufgrund dieser Drucksenkung in einem ersten flash-Schritt zunächst im Wesentlichen mitabsorbierte Wertgase (Kohlenmonoxid und Wasserstoff) freigesetzt, die über Leitung 26 abgezogen und Kompressor C-01 zugeführt werden. Auf 18 bar entspanntes beladenes Methanol wird weiter über Leitung 18 geführt und über das in Leitung 18 angeordnete Druckminderungsventil auf 8 bar entspannt. Im mittleren Teil der flash-Kolonne werden aufgrund dieser weiteren Drucksenkung in einem zweiten flash-Schritt weiterhin im Wesentlichen mitabsorbierte Wertgase (Kohlenmonoxid und Wasserstoff) freigesetzt, die über Leitung 17 abgezogen und Kompressor C-01 zugeführt werden. Kompressor C-01 verdichtet die Wertgase aus den Leitungen 17 und 26 auf Absorptionsdruck (40 bar). Die verdichteten Wertgase werden anschließend über die Leitungen 7, 5, 32 und 14 in die Absorptionskolonne T-01 zurückgeführt.

Das aus der zweiten flash-Stufe über Leitung 19 abgezogene Methanol wird in Wärmeaustauscher HX-04 mit Hilfe eines Teils des rohen Synthesegases aus Leitung 1 (nicht gezeigt) angewärmt und über Leitung 20 in eine dritte flash-Stufe dem oberen Teil der flash-Kolonne zugeführt. Die dritte flash-Stufe ist eine der ersten und zweiten flash-Stufe nachgeschaltete flash-Stufe. In Leitung 20 ist ein weiteres Druckminderungsventil angeordnet, welches das beladenen Methanol, welches hauptsächlich noch Kohlendioxid als absorbierte Gaskomponenten enthält, auf 1,3 bar entspannt.

Der dritten flash-Stufe werden über Leitung 25 Methanol-Dämpfe aus Rektifikationskolonne T-03 zugeführt, welche in der dritten flash-Stufe als Stripp-Medium verwendet werden und die Menge des in der dritten flash-Stufe aus dem Absorptionsmittel ausgetriebenen (desorbierten) Kohlenmonoxids im Vergleich mit einer reinen flash-Anordnung erhöhen. Die dritte flash-Stufe kann somit auch als Stripp-Stufe gesehen werden, wobei Methanol-Dämpfe als Stripp-Medium verwendet werden. Gleichzeitig wirkt sich die Anwärmung über Wärmeaustauscher HX-04 des über Leitung 20 zugeführten beladenen Methanols positiv auf die Ausbeute des abgeschiedenen Kohlendioxids aus. Das aus der dritten flash-Stufe erhaltene Kohlendioxid wird über Leitung 4 aus dieser flash-Stufe abgezogen. Es weist eine niedrige Temperatur von -36 °C auf und wird daher zum Kühlen dies rohen Synthesegases aus Leitung 1 in Wärmeaustauscher HX-01 genutzt. Das Kohlendioxid-Produkt wird über Leitung 2 weitergeführt und durch Kompressor C-02 verdichtet. Das verdichtete Kohlendioxid kann anschließend gelagert (CCS) oder einer weiteren Verwendung zugeführt werden (CCU).

Das in der dritten flash-Stufe erhaltene Methanol weist nur noch einen geringfügigen Restgehalt an absorbiertem Kohlendioxid auf. Es wird über Leitung 21 aus der dritten flash-Stufe abgezogen und mit Hilfe von Pumpe P-01 auf Absorptionsdruck (40 bar) verdichtet. Es wird anschließend über Leitung 22 weitergeführt und zur erneuten Absorption von Kohlendioxid der Absorptionskolonne T-01 in deren Kopfbereich zugeführt.

Da das Absorptionsmittel Methanol permanent im Kreislauf gepumpt wird und eine große Zahl an Absorptions- und Desorptions-Zyklen durchläuft, reichert es sich über die Zeit mit in der Absorptionskolonne T-01 aus dem rohen Synthesegas aufgenommenem Wasser an. Aus diesem Grund wird ein Teil des weitgehend von absorbierten Bestandteilen befreiten Methanols aus Leitung 22 abgezweigt und über Leitung 23 zunächst in Wärmeaustauscher HX-05 gegen heiße Methanol-Dämpfe aus Leitung 27 erwärmt. Die Menge des über Leitung 23 abgezogenen Methanols wird so eingestellt, dass sich Wasser in Methanol im Kreislauf zwischen Absorptionskolonne T-01 und flash-Kolonne nicht anreichern kann, das heißt eine vordefinierte Grenzkonzentration nicht überschritten wird. Es wird anschließend über Leitung 24 einem oberen Bereich der Rektifikationskolonne T-03 zugeführt. In Leitung 24 ist ein Druckminderungsventil angeordnet, durch welches das Methanol auf 2 bar entspannt wird. Der Rektifikationskolonne T-03 wird auch Wasser in einem mittleren Bereich zugeführt. Dabei handelt es sich um das in den Abscheidern D-01 und D-02 aus dem rohen Synthesegas abgeschiedene Wasser. Dieses wird über Leitung 33 herangeführt und in Wärmeaustauscher HX-03 gegen heißes Wasser, welches die Rektifikationskolonne T-03 als Sumpfprodukt über Leitung 29 verlässt, angewärmt. Rektifikationskolonne T-03 wird weiterhin über einen Aufkocher mit Frischdampf beheizt (nicht gezeigt). In Rektifikationskolonne T-03 findet im Wesentlichen eine Trennung von Methanol und Wasser statt, wobei Methanol-Dämpfe die Rektifikationskolonne T-03 über Leitung 27 als Kopfprodukt verlassen, in Wärmeaustauscher HX-05 gegen Methanol aus Leitung 23 leicht abgekühlt werden und über Leitung 25, wie oben erwähnt, in die dritte flash-Stufe als Stripp-Medium eingespeist werden.

In einer alternativen Ausführungsform (nicht gezeigt) werden die aus Leitung 27 abgezogenen Methanol-Dämpfe vollständig kondensiert und das so erhaltene kondensierte Methanol Leitung 22 zur weiteren Einspeisung in die Absorptionskolonne T-01 zugeführt.

Wasser wird aus Rektifikationskolonne T-03 als Sumpfprodukt über Leitung 29 abgezogen, gegen Wasser aus Leitung 33 gekühlt und aus dem Verfahren abgezogen.

Die folgende Tabelle zeigt ein Beispiel für eine Stoffbilanz gemäß den oben beschriebenen Ausführungsformen des erfindungsgemäßen Verfahrens. Das über Leitung 1 herangeführte Synthesegas ist ein in einer Wassergas-Shift-Einheit behandeltes Synthesegas mit hohem Kohlendioxidgehalt und hohem Wasserstoffgehalt. Entsprechend niedrig ist der Anteil an Kohlenmonoxid. Weiterhin sind inerte Bestandteile wie Methan und Stickstoff sowie geringe Mengen an Methanol enthalten. Es ist in der folgenden Tabelle als rohes Synthesegas bezeichnet.

Das im Wesentlichen von Kohlendioxid befreite und vollständig von Wasser befreite Synthesegas, welches über Leitung 6 aus dem Verfahren abgezogen wird, ist als gereinigtes Synthesegas bezeichnet.

Ferner ist das Kohlendioxid-Produkt aufgeführt, welches über Leitung 3 aus dem Verfahren abgezogen wird.

Ferner ist das Wasser aufgeführt, welches über Leitung 30 aus dem Verfahren abgezogen wird.

Die Materialbilanz wurde durch eine Simulation mit Hilfe der Prozesssimulationssoftware "Aspen Plus V9" erstellt.

| | Einheit | **rohes Synthesegas** | **gereinigtes Synthesegas** | **Kohlendioxid-Produkt** | **Wasser** |
|---|---|---|---|---|---|
| **Molanteil** | | | | | |
| Kohlendioxid (CO₂) | mol/mol | 0,247 | 0,045 | 0,986 | 0,00 |
| Wasserstoff (H₂) | mol/mol | 0,714 | 0,915 | 0,002 | 0,00 |
| Stickstoff (N₂) | mol/mol | 0,001 | 0,002 | 0,000 | 0,00 |
| Kohlenmonoxid (CO) | mol/mol | 0,010 | 0,012 | 0,001 | 0,00 |
| Methan (CH₄) | mol/mol | 0,021 | 0,025 | 0,008 | 0,00 |
| Methanol (CH₃OH) | mol/mol | 0,002 | 0,000 | 0,002 | 0,00 |
| Wasser (H₂O) | mol/mol | 0,005 | 0,000 | 0,000 | 1,00 |
| **Stoffmengenstrom gesamt** | kmol/hr | 12514 | 9715 | 2690 | 61 |
| **Temperatur** | °C | 40 | 40 | 40 | 40 |
| **Druck** | bar | 41 | 39,3 | 1,1 | 3,8 |

Die Materialbilanz zeigt, dass durch das erfindungsgemäße Verfahren ein von Wasser befreites (trockenes) Kohlendioxid-Produkt erhältlich ist, welches über einen hohen Kohlendioxid-Anteil von 98,6 mol-% verfügt.

Die folgende Tabelle zeigt zwei Beispiele (Beispiel 1 und Beispiel 2) gemäß dem erfindungsgemäßen Verfahren, welches folgende Parameter zeigt:
- den Anteil des im gereinigten Synthesegases (Leitung 6) erhaltenen Wasserstoffs vom theoretisch aus dem rohen Synthesegas gewinnbaren Wasserstoffs (*H₂ recovery*),
- den Anteil des aus dem rohen Synthesegas abgeschiedenen Kohlendioxids vom theoretisch abscheidbaren Kohlendioxid (*CO₂ capture rate*),
- die erforderliche Kühlleistung,
- die erforderliche Kühlwassermenge, sowie
- die erforderliche elektrische Energie

Gemäß Beispiel 1 werden die in der Rektifikationskolonne T-03 erhaltenen Methanol-Dämpfe (Leitung 27) vollständig durch einen Kühler kondensiert und in die Absorptionskolonne T-01 zur Nutzung als Absorptionsmittel zurückgeführt (nicht in Figur 1 gezeigt).

Gemäß Beispiel 2 werden die in der Rektifikationskolonne T-03 erhaltenen Methanol-Dämpfe (Leitung 27) über Leitung 25 weitergeführt und in der dritten flash-Stufe der flash-Kolonne T-02 als Stripp-Medium genutzt.

Die in der folgenden Tabelle ermittelten Werte wurden durch Simulation mit Hilfe der Software "Aspen Plus V9" erhalten.

| | | **Beispiel 1** | **Beispiel 2** |
|---|---|---|---|
| H₂ recovery | % | 99,9 | 99,9 |
| CO₂ capture rate | % | 85,2 | 85,9 |
| Kühlmittel-Leistung | MW | 4,40 | 4,41 |
| Kühlwasser-Menge | t/h | 794 | 27 |
| Elektrische Energie | kW | 2486 | 2383 |

Gemäß beiden Beispielen wird Wasserstoff vollständig aus dem eingesetzten Synthesegas zurückgewonnen. Überraschend hat sich gezeigt, dass gemäß der Verfahrensführung gemäß Beispiel 2 eine größere Menge Kohlendioxid zurückgewonnen werden kann. Weiterhin überraschenderweise ist dafür keine signifikant höhere Kühlmittel-Leistung erforderlich, und die Menge an benötigter elektrischer Energie sinkt. Da die Methanoldämpfe aus Leitung 27 außerdem nicht kondensiert werden, sinkt die erforderliche Kühlwasser-Menge, das heißt der Kühlwasser-Fluss, drastisch.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination von Merkmalen in Bezug auf verschiedene Arten von Gegenständen oder Anspruchstypen in Betracht gezogen werden kann. Merkmale können kombiniert werden um synergetische Effekte zu erzielen, welche über die einfache Summierung der technischen Merkmale hinausgehen.

Während die Erfindung im Detail in der Zeichnung und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnung, der Offenbarung und der abhängigen Ansprüche verstanden und ausgeführt werden.

### Bezugszeichenliste

- 1 bis 34: Leitung
- HX-01 bis HX-06: Wärmeaustauscher
- HU-01: Kältemittel-Kühler
- D-01, D-02: Abscheider
- T-01: Absorptionskolonne
- T-02: Flash-Kolonne
- T-03: Rektifikationskolonne
- P-01, P-02: Pumpe
- C-01, C-02: Kompressor

## Patentansprüche

1. Verfahren zum Entfernen von Kohlendioxid (CO₂) aus Synthesegas, wobei das Synthesegas zumindest Wasserstoff (H₂), Kohlenmonoxid (CO), Kohlendioxid (CO₂), sowie Wasser (H₂O) beinhaltet, umfassend die folgenden Verfahrensschritte:
(a) Bereitstellen eines hygroskopischen, physikalisch wirkenden Absorptionsmittels;
(b) Zumindest teilweises Entfernen von Wasser aus dem Synthesegas durch Kühlen des Synthesegases unter den Taupunkt von Wasser und Abscheiden des kondensierten Wassers;
(c) Kühlen des Absorptionsmittels;
(d) Entfernen von Kohlendioxid aus dem gekühlten Synthesegas durch das gekühlte Absorptionsmittel in einem physikalischen Absorptionsschritt bei erhöhtem Druck, wobei das gekühlte Synthesegas und das gekühlte Absorptionsmittel im Gegenstrom geführt werden, wobei zumindest teilweise von Wasser und Kohlendioxid befreites Synthesegas erhalten wird, sowie mit Kohlendioxid und teilweise mitabsorbiertem Kohlenmonoxid und Wasserstoff beladenes Absorptionsmittel erhalten wird;
(e) Ausschleusen des zumindest teilweise von Wasser und Kohlendioxid befreiten Synthesegases aus dem Verfahren;
(f) Behandeln des beladenen Absorptionsmittels in einer Mehrzahl hintereinander geschalteter flash-Stufen, wobei in zumindest einer ersten flash-Stufe mitabsorbiertes Kohlenmonoxid und Wasserstoff aus dem beladenen Absorptionsmittel entfernt wird, und in einer der ersten flash-Stufe nachgeschalteten flash-Stufe Kohlendioxid aus dem beladenen Absorptionsmittel entfernt wird;
(g) Verdichten auf Absorptionsdruck und Rückführen des in Schritt (f) erhaltenen Kohlenmonoxid und Wasserstoff zu Schritt (d);
(h) Ausschleusen des in Schritt (f) erhaltenen Kohlendioxid aus dem Verfahren.

2. Verfahren nach Anspruch 1, **dadurch gekennzeichnet, dass** in einem Schritt (f) nachgeschalteten Destillationsschritt Wasser aus dem Absorptionsmittel entfernt wird.

3. Verfahren nach Anspruch 2, **dadurch gekennzeichnet, dass** der Destillationsschritt zur Entfernung von Wasser temporär betrieben wird, insbesondere temporär infolge eines Überschreitens einer Grenzkonzentration von Wasser im Absorptionsmittel betrieben wird.

4. Verfahren nach Anspruch 2 oder 3, **dadurch gekennzeichnet, dass** im Destillationsschritt erhaltene Absorptionsmitteldämpfe als Stripp-Medium zum Entfernen von Kohlendioxid in der nachgeschalteten flash-Stufe gemäß Schritt (f) genutzt werden.

5. Verfahren nach einem vorhergehenden Ansprüche, **dadurch gekennzeichnet, dass** die nachgeschaltete flash-Stufe gegenüber der ersten flash-Stufe einen niedrigeren Druck aufweist.

6. Verfahren nach einem der vorhergehenden Ansprüche, **dadurch gekennzeichnet, dass** in der nachgeschalteten flash-Stufe erhaltenes Absorptionsmittel zur erneuten Absorption von Kohlendioxid zum physikalischen Absorptionsschritt gemäß Schritt (d) zurückgeführt wird.

7. Verfahren nach einem der vorhergehenden Ansprüche, **dadurch gekennzeichnet, dass** das Synthesegas in einem dem Verfahren vorgeschalteten Verfahrensschritt einer Wassergas-Shift-Reaktion zur Erhöhung der Wasserstoffausbeute unterzogen wird, wobei sich das Synthesegas mit Wasser und Kohlendioxid anreichert.

8. Verfahren nach einem der vorhergehenden Ansprüche, **dadurch gekennzeichnet, dass** das Synthesegas keine Schwefelverbindungen als Verunreinigungen aufweist, insbesondere keinen Schwefelwasserstoff (H₂S) und/oder kein Carbonylsulfid (COS) als Verunreinigung aufweist.

9. Verfahren nach einem der vorhergehenden Ansprüche, **dadurch gekennzeichnet, dass** das Synthesegas keinen Cyanwasserstoff (HCN) und/oder kein Ammoniak (NH₃) als Verunreinigung aufweist.

10. Verfahren nach einem der vorhergehenden Ansprüche, **dadurch gekennzeichnet, dass** das Kohlendioxid nach dem Ausschleusen aus dem Verfahren gemäß Schritt (h) keinem Trocknungsschritt unterzogen wird.

11. Verfahren nach einem der vorhergehenden Ansprüche, **dadurch gekennzeichnet, dass** das Kohlendioxid keinem Kondensationsschritt unterzogen wird.

12. Verfahren nach einem der vorhergehenden Ansprüche, **dadurch gekennzeichnet, dass** das Verfahren keinen Heißregenerationsschritt zur Regenerierung des beladenen Absorptionsmittels umfasst.

13. Verfahren nach einem der vorhergehenden Ansprüche, **dadurch gekennzeichnet, dass** Wasser durch gekühltes Absorptionsmittel in einem weiteren physikalischen Absorptionsschritt bei erhöhtem Druck entfernt wird.

14. Verfahren nach einem der vorhergehenden Ansprüche, **dadurch gekennzeichnet, dass** das bereitgestellte hygroskopische, physikalisch wirkende Absorptionsmittel Methanol beinhaltet, oder im Wesentlichen aus Methanol besteht, oder aus Methanol besteht.

15. Verfahren nach einem der Ansprüche 1 bis 14, **dadurch gekennzeichnet, dass** das bereitgestellte hygroskopische, physikalisch wirkende Absorptionsmittel N-Methyl-2-pyrrolidon (NMP) beinhaltet, oder im Wesentlichen aus NMP besteht, oder aus NMP besteht.

16. Verfahren nach einem der vorhergehenden Ansprüche, **dadurch gekennzeichnet, dass** das Kohlendioxid nach Ausschleusen aus dem Verfahren gemäß Schritt (h) verdichtet und optional verflüssigt wird, und anschließend gelagert wird oder einer weiteren Verwendung zugeführt wird.

17. Verfahren nach einem der vorhergehenden Ansprüche, **dadurch gekennzeichnet, dass** ein Inertgas, insbesondere Stickstoff (N₂), als Stripp-Medium zum Entfernen von Kohlendioxid in der nachgeschalteten flash-Stufe gemäß Schritt (f) genutzt wird.

18. Anlage zum Entfernen von Kohlendioxid (CO₂) aus Synthesegas, wobei das Synthesegas zumindest Wasserstoff (H₂), Kohlenmonoxid (CO), Kohlendioxid (CO₂), sowie Wasser (H₂O) beinhaltet, umfassend die folgenden miteinander in Fluidverbindung stehenden Anlagenkomponenten:
(a) Mittel zum Kühlen des Synthesegases unter den Taupunkt von Wasser;
(b) Mittel zum Abscheiden von aus dem Synthesegas auskondensierten Wassers;
(c) Mittel zum Kühlen eines hygroskopischen, physikalisch wirkenden Absorptionsmittels;
(d) Eine Absorptionskolonne zum Führen des gekühlten, von Wasser befreiten Synthesegases und des gekühlten Absorptionsmittels bei erhöhtem Druck im Gegenstrom, zur Entfernung von Kohlendioxid aus dem Synthesegas, wobei zumindest teilweise von Wasser und Kohlendioxid befreites Synthesegas erhältlich ist, sowie mit Kohlendioxid und teilweise mitabsorbiertem Kohlenmonoxid und Wasserstoff beladenes Absorptionsmittel erhältlich ist;
(e) Mittel zum Ausschleusen des von Wasser und Kohlendioxid befreiten Synthesegases aus der Anlage;
(f) Eine Mehrzahl hintereinander geschaltete flash-Stufen, beinhaltend eine erste flash-Stufe zur Entfernung des mitabsorbierten Kohlenmonoxid und Wasserstoff aus dem beladenen Absorptionsmittel, sowie beinhaltend eine der ersten flash-Stufe nachgeschaltete flash-Stufe zur Entfernung von Kohlendioxid aus dem beladenen Absorptionsmittel;
(g) Ein Kompressor zum Verdichten von aus beladenem Absorptionsmittel entferntem Kohlenmonoxid und Wasserstoff und zum Rückführen des verdichteten Kohlenmonoxid und Wasserstoff zur Absorptionskolonne (c);
(h) Mittel zum Ausschleusen von aus beladenem Absorptionsmittel entferntem Kohlendioxid aus der Anlage.

19. Anlage nach Anspruch 18, **dadurch gekennzeichnet, dass** der Mehrzahl hintereinander geschalteter flash-Stufen (f) eine Destillationsvorrichtung zur Entfernung von Wasser aus dem Absorptionsmittel nachgeschaltet ist.

20. Anlage nach Anspruch 19, **dadurch gekennzeichnet, dass** die Anlage Mittel zum Abziehen von Absorptionsmitteldämpfen aus der Destillationsvorrichtung und Mittel zum Einleiten der Absorptionsmitteldämpfe in die der ersten flash-Stufe nachgeschalteten flash-Stufe zur Verwendung der Absorptionsmitteldämpfe als Stripp-Medium beinhaltet.

21. Verwendung des Verfahrens nach einem der Ansprüche 1 bis 17 oder der Anlage nach einem der Ansprüche 18 bis 20 zur Abscheidung von Kohlendioxid aus schwefelfreiem Synthesegas.
